# EUROPEAN PATENT SPECIFICATION

(11) **EP 0 941 026 B1**
(45) Date of publication and mention of the grant of the patent: **29.10.2003**
(21) Application number: 97915209.7
(22) Date of filing: 04.04.1997
(51) Int. Cl.: A01N 1/00, A01N 3/00, A41G 3/00, B32B 9/00, E04F 13/14

(54) **ORNAMENTAL NATURAL ROCK COMPOSITE**
ZIERVERBUNDWERKSTOFF AUS NATURSTEIN
MATERIAU COMPOSITE DECORATIF SIMULANT LA ROCHE NATURELLE

(30) Priority: 20.06.1996 BR 9601860
(43) Date of publication of application: 15.09.1999
(73) Proprietor: Olivan, Lucy Ines, CEP-Sao Paulo (BR); Ferreira de Menezes, Odecio, CEP-Sao Paulo, SP (BR); Gonçalves de Menezes, Felipe, CEP-Sao Paulo, SP (BR)
(72) Inventor: Olivan, Lucy Ines, CEP-Sao Paulo (BR); Ferreira de Menezes, Odecio, CEP-Sao Paulo, SP (BR); Gonçalves de Menezes, Felipe, CEP-Sao Paulo, SP (BR)
(74) Representative: Esteban Perez-Serrano, Maria Isabel
(86) International application number: BR9700011
(87) International publication number: WO97048273

(56) References cited:
- WO-A-88/01669
- DE-A- 2 833 874

## Description

This application is related to a patent for "Plates of composite material consisting of ornamental or natural rocks, such as marble or granite, and other material named support, and the process for obtaining such product", which can replace the conventional plates made of rocks in the present uses and in any desired dimension with economy and keeping quality.

Taking history into account, it must be pointed out that little is left unsaid about the beauty and durability of ornamental rocks, it is enough to contemplate the works and structures still existing, built thousand of years ago by Greeks and Romans. In those constructions, marble and granite were used in the shape of blocks and had structural functions, besides the aesthetic beauty that was given by the sculpted shapes on their apparent surfaces.

As time went by, with the evolution of architecture and building techniques, structures stated to have thinner dimensions and marble and granite began changing from the function of structural elements also to the covering materials, being called since then as ornamental rocks. As such, these materials stopped being used as blocks and started being used in the form of plates (where two dimensions prevail over a third) and with thickness each time smaller. Nowadays, the covering plates or other use are utilized more frequently in thickness from 10 to 30 mm.

The final price offered to the consumer of marble and granite is, no doubt, the main inhibitor of a larger consumption, although it is out of question the acceptance of such products. Despite the efforts for modernizing the sector with the development and acquisition of machines that optimize the productivity, marble industries have in the costs of basic raw material (ornamental rocks), a limitation in reducing prices.

On the other hand, there are increasing alternatives for covering materials, which dispute these days for the spaces previously dominated by ornamental rocks. Materials as ceramics, wainscots made out of wood, and metal such aluminum or steel, plates of stainless steel, colored synthetic mortar, reflecting or tinted glass, besides the great variety of highly resistant paints and varnishes, occupy more and more the interior facades and floor of buildings, most of times losing in durability but easily gaining in price and in the easy way of applying.

Though there have been meaningful advances in the processes of quarry and production, there has been no great evolution in the presentation and form of sales of products manufactured out of ornamental rocks.

The launching of new products which make cheaper the price paid by the final consumer and give better attributes with no harm to durability and aesthetics are the most efficient means to make sales of an industry take off, improving its participation in the market in detriment of its competitors. Meaningful examples of this strategy are offered by the electric-electronic industries, where the launching of new products occur in periods of time shorter every time, with constant technological advances and prices more and more attractive. The common trace and most outstanding in industries of such nature is the presence of research, aiming the development of new products and optimization of constructing processes.

In civil engineering, research does not develop in the same remarkable way of other segments of engineering. Technological advances are timid and the outstanding ones are, as a matter of fact, deriving from byproducts of other areas in science as the structural calculation, as an example. The fall in prices in constructions have been more due to the consequence of employing less durable materials and therefore cheaper and new concepts of space occupation, when dwelling units are every time smaller.

The present invention intends to promote the increase in consumption of ornamental rocks through rationalizing the utilized thickness. Despite the high hardness and durability, rocks are friable materials, a fact which limits its production and application in small thickness (less than 10 mm). It is precisely this limitation the invention intends to eliminate, making it possible to utilize thickness of up to 1mm.

It is known that to diminish production costs, minimize expenses with raw material and eliminate wastes are irreversible goals which must be constantly sought to maintain competition in an industry.

The objectives of this invention are to reconcile quality, durability, aesthetics, less weight, larger margins for the manufacturer and smaller prices for the consumer.

The object of this invention is presented in the shape of a flat plate, i.e., with two prevailing dimensions much larger than the third one, which is called thickness. The final dimensions of the plates will depend on the intended utilization, which may vary from the dimensions obtained by the cutting of blocks up to small plates for floor or wall lining tiles.

Follows the explanation of the invention in all of its details and, for a better understanding, reference is made to the enclosing drawings, in which are represented:
Figure 1: view in perspective of the plate obtained according to the present process, with detail in section;
Figure 2: Diagrammatic drawing showing the process of reconstitution of blocks;
Figure 3: Drawing with an example for sequence of molding flow and cutting of a block measuring (1.0 x 1.0 x 1.0)m, only for easier understanding, for final obtention of plates with total thickness of 30mm and 5mm rock thickness;
Figure 4 Drawing illustrating the application of the plate, according to the present invention on a floor;
Figure 5: Drawing illustrating the application of plate, according to the present invention, on wainscot;
Figure 6: Drawing illustrating the application of the plate, according to the present invention, as cover plates;
Figure 7: Drawing illustrating the application of the plate, according to the present invention, on sinks;

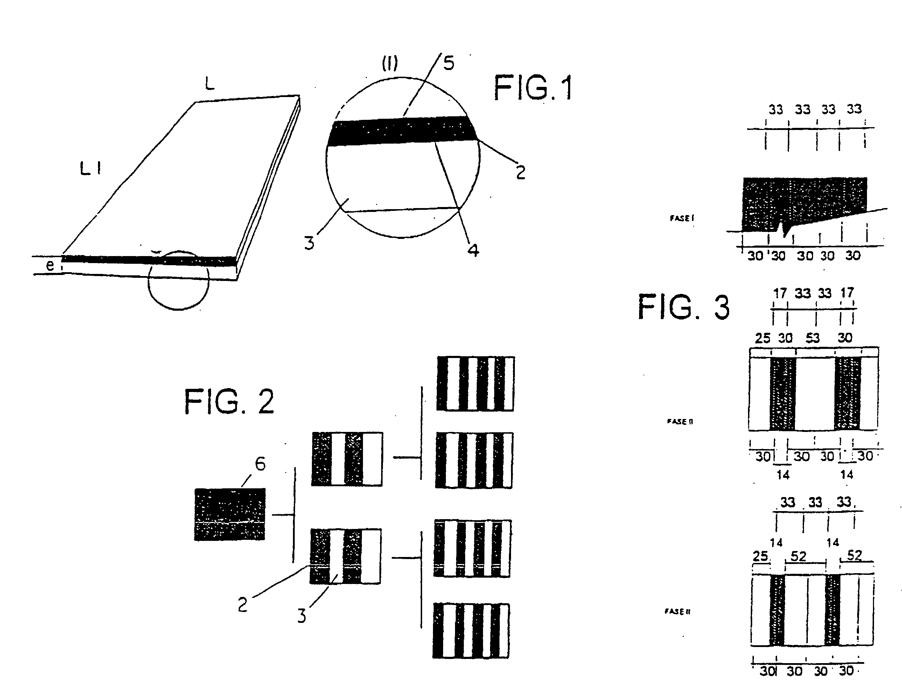

The product of this invention (figure 1) is formed by :
- a layer of rock (2) constituted by a plate of ornamental rock, such as marble or granite, with minimum thickness limited by the precision of the cutting by the equipment, and wear by polishing, and the maximum one according to the needs of use. It is the part of the product whose presentation and characteristics must be kept complete, for its external surface (5) will characterize the final product. The finish of said surface (5) can be the same normally used in said materials, as per the intended and desired use;
- A supporting layer (3) has as purpose to support the rock layer (2) and to give rigidity to the final product as a whole, with its thickness being determined also as a function of the intended utilization, with the final thickness of the product being similar to the ones normally found for ornamental rocks. Concrete constituted by cement mortar, sand and coarse aggregate, micro-concrete, light weight concrete, mortars with special binding elements applied in plastic consistency, that after hardened, promote the adhesion condition and rigidity required in the final product.

In order to provide a better ductility to the final product, it can be incorporated to the supporting layer (3) materials, such as reinforcing bars or welded wire fabric, other ductile material, in a way that the whole functions with characteristics similar to those of a plate of concrete or ferrocement.

The adhesion surface (4) is responsible for the jointly behavior of the materials which constitute the rock layer and the supporting layer. The shearing stresses which occur in the level of this surface must be less than the limit tensions of bonding promoted between the materials of the two layers.

The bonding can be obtained by contact of the rock (2) with the fused material of the supporting layer (3). with or without the use of glues, in the same way it is observed and widely studied and known the occurrence of bonding between mortar or concrete and the rock foundation of structures or of aggregates which form concrete.

Another way of providing the bond between the layers of rock (2) and the support (3) is by gluing both parts, by the use of supporting layers already cast and in the way of rigid plates. For this purpose, it can be used adhesives commonly used in gluing ornamental rocks and concrete, such as, for example, epoxies, acrylic, etc.

The invention, as described, is not only a product associated to one single configuration, but a series of alternatives and combination of materials which aim to promote and emphasize the essential and sought characteristics necessary in its utilization. Therefore, for any condition of utilization, it is possible to dimension the product to bear the loads occurring from external actions.

For the supporting layer (3), concrete, micro-concrete, common or light weight mortars, reinforced or not, woods and rocks which duly dimensioned, resist the efforts the plate will be submitted.

In respect to the productive process, it must be pointed out that the production of new products normally demands immobilization costs with new machines. In the production of this product, the improvement machines may be used. This happens due to the concept of reconstitution of the blocks.

The reconstitution of the blocks (Figure 2 attached hereto) is the concept by which, based upon a common rock block (6) (100% rock), many other blocks are obtained by slices of rock plates (2), intercalated with slices of supporting material (3).

Another advantage offered by the reconstitution of blocks is the possibility of formation of blocks with the used of different types of rocks. The blocks so reconstituted may generate, after the cutting, plates of product with different polished rock surfaces, therefore increasing the versatility of production.

In the case of Figure 2, as an explanatory example, we start from a common rock block (6), the volume of which is 1 m³.

It can be realized that, after reconstitution of the blocks, a total volume of 4 m³, compounded of 25% rock and 75% support, being the final production determined by 4 x n plates.

The reconstitution may be achieved by two different processes: cast block and mounted block.
- Cast Block: In this process, the block is obtained by molding the supporting layer, the material of which is poured with plastic consistency between the rock plates, which should be tightly fixed by means of clearance gauges and spacers which keep the rock plates parallel to each other and disposed in vertical position. Such care of positioning and fixation of the rock plates is justified due to the small thickness of the rock which will result in the future unfolding cuts of the plates, tolerance and deviations which may occur during the cutting process. The necessary verticality of the plates is due to the presupposed vertical trajectory of the blades during the cutting operations.

The maximum diameter of the coarse aggregates and the fluidity of the supporting material will be function of the minimum spaces available between the plates and possible existing reinforcement.

In the same manner as it exists in concrete techniques, the filling must be made upwards, concomitantly with vibration, to result in a good consolidation of the supporting material. An external formwork will give the final dimension to the block.

The procedures for the pouring, densification and cure to be utilized will depend on the chosen material for the supporting layer. Whatever alternative, the procedures employed should be sufficient to assure the total filling of the mold so to minimize the formation of bubbles or voids on the contact surfaces between the rock and the support, thus assuring the necessary binding.

In the case of production of the material of this invention by the "Cast block" process, the bind between the rock and the mortar or concrete will occur by the physical-chemical action to be developed on the surface of the rock during the hydration process of the cement.

The nature of the material suggested for the constitution of the supporting layer is a variation of the traditional sand and cement mortar, or the concrete itself. The concrete material is, in its turn, basically constituted by a "matrix" which is the cement paste (formed by cement and water) which involves and binds to inert materials that are the coarse aggregates (graves or crushed stones) and fine (sand). The coarse aggregates occupy up to 75% of the concrete volume result commonly from the crushing of rocks, amongst which the granite.

The visual evidence of the presence of bonding in concrete can be seen on the surface of rupture in compression and traction tests on the concrete.

In these surfaces, it cam be noticed the presence of broken aggregates, which evidences the occurrence of traction strains on the aggregates. These strains are results from the tensile stresses which actuate in the interface between the aggregate (rock) and the cement paste (Matrix). If it were not for the presence of bonding, there would be on these surfaces only the presence of aggregates, detached from the mortar. If the aggregates fractured, it was due to the fact that they were subject to tensile stress and the bond was what made possible the action of the tensile stresses.
- Mounted block: In this process, the blocks, in the desired dimensions, are obtained by alternative gluing of rock plates (2) and the support (3), (figure 2), which can be of rigid natural material or manufactured from mortar or pre cast concrete, with specified thickness. The bond between the supporting material and the rock must be obtained through synthetic adhesives, commonly used in the gluing of ornamental rocks and concrete, such as epoxies, acrylics or others and used as per specifications of each adhesive, considering the conditions and nature of substrates In any assumption, it must be guaranteed the perfect bonding between the plates, without the occurrence of bubbles or voids in the glued interfaces.

For the same reasons pointed out in the procedure above, the parallelism of the plates should be compatible with the tolerances of the cutting equipment.

So as to verify the output, which is the quantity in square meters of finished plates obtained from one cubic meter of rock, it was utilized the example submitted in figure 3. Its determination is a function of the thickness adopted for the layer of rock and the loss during the cutting. In the given example, a loss of 3mm will de adopted in each cut, and a 80% utilization of the original volume of the rock block.

The definition of the routines, dispositions and spacing of rock plates, as well as cutting tools, will depend upon many factors, namely:
- dimensioned thickness for the layers of rock and of the support;
- final thickness of the plates obtained after the binding of the rock plates and the support plates;
- more appropriate flow for the development and final polishing of the plates;
- different kinds of rocks to be utilized in the casting of a same block, according to the production necessity of different kind of products, in the same cutting operation.

As illustration and example, figure 3 is shown, where a sequence of casting flow and cut of a block of dimensions (1.0 x 1.0 x 1.0m) (only an example for easier understanding) for the final obtention of plates of the product object of this invention, with total thickness of 30 mm and 5mm of rock thickness.

According to the example showed in figure 3, Phase I presents cutting blades with 33mm spacing (axis) and rock block separated in plates of 30 mm thickness. The separation results, for an assumed loss of 20%, in an output of (1000/33)mm x 0,80 equal to 24m².

Phase II shows cutting blades with spacing of (17 + 33 + 33 + 33 + 17...)mm; block obtained from the 30mm rock plates (result from Phase I) and with 53 mm thick layers of support material. The development/output has the following result: 24 x 2 plates of product object of this invention with 30 mm = 48 m² and 24 rock plates with 14mm.

Phase III shows blades with spacing of 33 mm; block of product object of this invention obtained from the rock plates of 14mm (result from phase II) and with the 52mm thick layers of support material.

The development/output has the following result: 24 x 2 plates of the product object of this invention, with 30mm = 48m².

The final output of the operation is 4 x 24 resulting in 96 m² of plates of the product of this invention, namely: 300% superior in polished surface, for the demonstrated example, where the adopted rock layer was of 5mm.

The production can be focused in two different directions for the application of the product:
- Generic Use: The first is the use of a single type of supporting layer to fulfill the majority of simple needs and with the total thickness of the plate determined in function of its maximum dimensions and its manipulation. In this case, it could be indicated the use of mortar, with high compressive strength, set with welded wire fabric.
- Specific Use: The second possibility is to optimize also the use of different materials in the supporting layer, so that it can be added, besides the low cost, other additional advantages, for example, a reduction in weight of up to 50 kg/m² for thickness of 30mm, using light weight mortar.

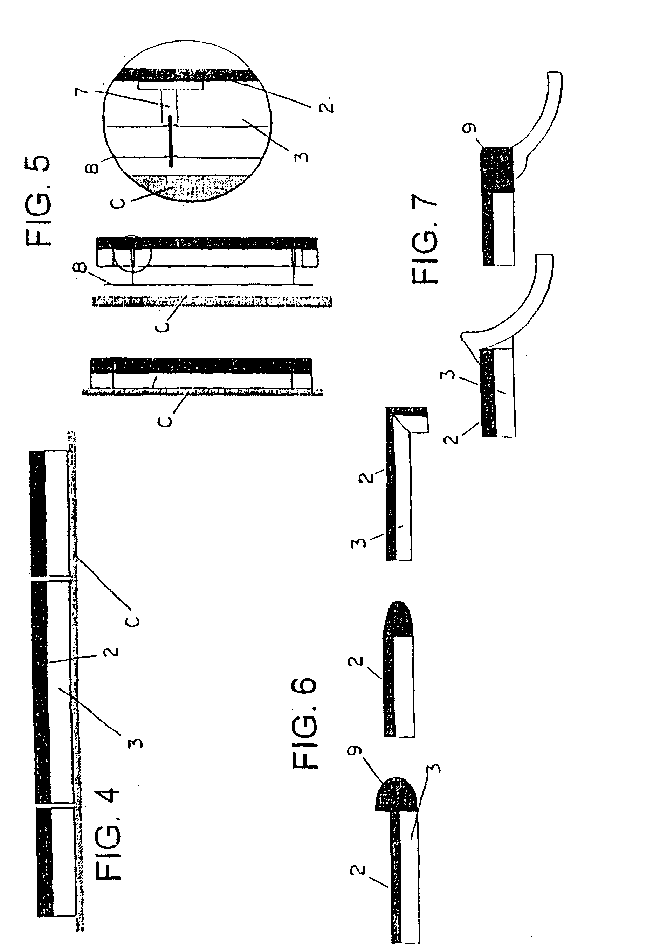

By the structural behavior of the pieces, the product object of the present invention can be grouped in:
- Floors: plates applied on continuous support, (figure 4), normally a rigid floor base (c). Depending of the material used in the supporting layer (3) and of the characteristics and intensity of the acting loads, it may be necessary to check the punching shear. In the case of normal loads for homes or offices (from 100 to 200 kg/m²), mortar or light weight concrete may be used as supporting material, and verified the punching shear strength of the product, having in view its thickness and compressive strength.

In the case where the option is for other materials, it may not be necessary such verification. The thickness of the rock layer will be determined as a function of use intensity (Private or public) and of the strength abrasion or wearing of the employed rock.
- Pre cast shutting panels: Panels can be executed for internal or external shutting, with two faces lined with ornamental rocks, as granite or marble, in the specified dimensions.

The panels may be made through a straight cut in the reconstituted block or by the juxtaposition of two plates of the product glued on the surface of the supporting layer.
- Wainscot: for internal or external linings of walls, applied with mortar up to the desired levels, mortar or light concrete may be used as the material for the supporting layer.

When the fixation by "inserts" is recommended, the anchor bolts (figure 5) may be inserted in the supporting layer and glued on the layer of rock. In this case, the plates as well as the anchor bolts (7) and the fixation structure (8) must be dimensioned for the required efforts deriving from external actions prescribed by the design specifications.

Another alternative is the utilization of conventional fixations by employing spacers.
- Covers: in the pieces (figure 6) used as covers or counter plates, it is frequent the stress by bending moments. In such conditions, it may be necessary the use of steel mesh or reinforcements, making it possible to the piece a performance similar to concrete plates or ferrocement.

In applications with apparent edge, where it is necessary to have a finishing, the solution is the traditional use of gables (9) or, of the product object of this invention itself, glued with 45 degree cut. These solutions are already normally adopted in the edges of sinks and counters in conventional plates of marble and granite.
- Sinks: in the case of internal recutting of plates, as in the case of vats or sinks, the alternatives are the use of internal gables (9) or of vats of the type shown in figure 7.

As for the aspect of economical viability, the concept of the product of this patent application is based upon the substitution of part of a more expensive material: ornamental rocks, for another cheaper, used only as support: mortars, concretes or other natural materials. It is therefore clear that, the more expense is the rock to be substituted by the support, the larger will be the advantages of the process, namely:
- lower unitary cost of the product in relation to the conventional product, permits the formulation of sale prices substantially lower for the same percentage of net profit margin;
- with more competitive prices, it is possible to recompose or increase the percentage of gross margin to face fixed costs;
- with prices substantially lower, it is possible and probable that the volume of sales will increase, making it possible a larger average of fixed costs and, consequently, an increase in net margins;
- with the fall in prices obtained by the process, it will be possible to increase the sale of expensive products which give better margins of net profit;
- the difference in weight of up to 1500 kg/m3, in the case of supporting layer with light weight mortar, allows a meaningful economy in the transportation of finished plates.

## Claims

1. A process for obtaining a composite plate consisting of an ornamental rock layer, a support layer and, optionally, anchor bolts (7) inserted in the support layer and glued on the rock layer, which process is **characterised by**
- a step of "reconstituting" a block from slices of rock intercalated by slices of support material and
- a step of cutting the "reconstituted" block
wherein the "reconstitution" of the block is done by casting of supporting layers (3) whose material is poured with plastic consistency into the rock layers (2) which must be spaced and fixed by means of clearance gauge and spacers which keep the plates of rock parallel to each other and disposed in vertical position.

2. A process for obtaining a composite plate according to claim 1, **characterized in that** in the supporting layer are incorporated reinforcing bars or welded wire fabric.

3. A process for obtaining a composite plate according to claim 1 or 2, **characterized in that** in applications with shown edge, where is necessary to have a finishing, gables (9) are present.

4. A process for obtaining a composite plate consisting of an ornamental rock layer and a support layer which is **characterised by**
- a step of "reconstituting" a block from slices of rock intercalated by slices of support material and
- a step of cutting the "reconstituted" block
wherein the "reconstitution" of the block is performed by the alternate gluing of rock plates and support plates (3) previously manufactured wherein adhesive used is a synthetic adhesive such as epoxies, acrylics or others, commonly used in the gluing of ornamental rocks and concrete.

## Patentansprüche

1. Ein Verfahren zur Herstellung von Verbundüberzug, der aus einer Ziergesteinschicht, einer Trägerschicht und wahlweise aus einem Verankerungsband (7) in der Trägerschicht und an der Steinschicht angeklebt, besteht, wobei dieses Verfahren durch Folgendes **gekennzeichnet** ist:
- ein Schritt, um einen Block zu "rekonstituieren" aus Steinschichten mit versetzt eingeordneten Trägerschichten und
- ein Schritt, um den "rekonstituierten" Block zu schneiden, wobei die "Rekonstituierung" des Blocks durch den Abfluss der Trägerschichten (3) gemacht wird, dessen Material mit Plastikkonsistenz in die Steinschichten (2) gegossen wird, die durch Hohlräume und Abstandhalter ausgefüllt und befestigt werden müssen, die die Steinverbunde parallel zueinander halten und in lotrechter Position angeordnet sind.

2. Ein Verfahren zur Herstellung von Verbundüberzug gemäss Anspruch 1, **dadurch gekennzeichnet ist, dass** in die die Trägerschichten Verstärkungsstangen oder Schweissstahlgewebe eingearbeitet sind.

3. Ein Verfahren zur Herstellung von Verbundüberzug gemäss Anspruch 1 oder 2, **dadurch gekennzeichnet, dass** bei den Anwendungen mit sichtbaren Kanten, die eine Endbearbeitung benötigen, Blendgiebel (9) vorhanden sind.

4. Ein Verfahren zur Herstellung von Verbundüberzug, der aus einer Ziergesteinschicht und einer Trägerschicht besteht, das durch Folgendes **gekennzeichnet** ist:
- ein Schritt, um den Block von Gesteinsscheiben mit zwischengelegten Scheiben von Trägermaterial zu "rekonstituieren" und
- ein Schritt, um den "rekonstituierten" Block zu schneiden, wobei die "Rekonstituierung" des Blocks durch abwechselndes Aufkleben von Gesteinsschichten und Trägerschichten (3), die vorher hergestellt wurden, wobei der benutzte Klebstoff synthetischer Klebstoff ist, wie Epoxys, Akryle oder andere, normalerweise zum Kleben von Ziersteinen und Zement eingesetzte Klebstoffe.

## Revendications

1. Un procédé d'obtention d'une plaque en composite consistant en une couche de roche ornementale, une couche de support et, optionnellement, ledit procédé est **caractérisé par**
- une étape de «reconstitution» d'un bloc à partir de tranches de roche intercalées par des tranches de matière de support et
- une étape de coupage du bloc «reconstitué»
dans lequel la «reconstitution» du bloc est faite en moulant les couches de support (3) dont la matière est coulée avec une consistance plastique dans les couches de roche (2), lesquelles doivent être espacées et fixées au moyen d'un gabarit de libre passage et des intercalaires qui maintiennent les plaques de roche parallèles les unes aux autres et disposées en position verticale.
- des boulons d'ancrage (7) insérés dans la couche de support et collés sur la couche de roche.

2. Un procédé d'obtention d'une plaque en composite selon la revendication 1, **caractérisé en ce que** dans la couche de support, on incorpore des barres de renfort ou un treillis soudé.

3. Un procédé d'obtention d'une plaque en composite selon la revendication 1 ou 2, **caractérisé en ce** dans les applications ayant des arêtes apparentes, où il est nécessaire d'avoir un finissage, des gables (9) sont présents.

4. Un procédé d'obtention d'une plaque en composite consistant en une couche de roche ornementale et une couche de support qui est **caractérisé par**
- une étape de «reconstitution» d'un bloc à partir de tranches de roche intercalées par des tranches de matière de support et
- une étape de coupage du bloc «reconstitué»
dans lequel la «reconstitution» du bloc est réalisée par le collage alterne des plaques de roches et des plaques de support (3) préalablement fabriquées, dans lequel l'adhésif utilisé est un adhésif synthétique tel que des adhésifs époxy, acryliques ou d'autres, communément utilisés dans le collage de roches et de béton ornementaux.
